# FASCICULE DE BREVET EUROPEEN

(11) **EP 3 574 506 B1**
(45) Date de publication et mention de la délivrance du brevet: **06.01.2021**
(21) Numéro de dépôt: 18701351.1
(22) Date de dépôt: 25.01.2018
(51) Int. Cl.: G21C 1/32, G21C 15/18

(54) **REACTEUR NUCLEAIRE INTEGRANT UN ECHANGEUR DE CHALEUR PRIMAIRE DE SECURITE**
KERNREAKTOR MIT PRIMÄRSICHERHEITSWÄRMETAUSCHER
NUCLEAR REACTOR INCORPORATING A PRIMARY SAFETY HEAT EXCHANGER

(30) Priorité: 26.01.2017 FR 1750649
(43) Date de publication de la demande: 04.12.2019
(73) Titulaire: Société Technique pour l'Energie Atomique, 91190 Villiers Le Bacle (FR)
(72) Inventeur: CANDILLIER, Laurent, 13109 Simiane (FR); COSTANTINI, Frédéric, 13710 Fuveau (FR); FELZIERE, Michel, 13320 Bouc Bel Air (FR); DEMAS, Lorrain, 13480 Cabries (FR)
(74) Mandataire: Cabinet Camus Lebkiri
(86) Numéro de dépôt international: PCT/EP2018/051875
(87) Numéro de publication internationale: WO 2018/138217

(56) Documents cités:
- US-A1- 2013 336 440
- US-A1- 2013 336 441
- US-A1- 2015 146 838

## Description

### DOMAINE TECHNIQUE DE L'INVENTION

L'invention se rapporte au domaine des réacteurs nucléaires intégrant des échangeurs de chaleur primaire de sécurité, également appelé échangeur de chaleur primaire de secours pour le refroidissement du réacteur et l'évacuation de la puissance résiduelle du cœur en cas d'incident.

L'invention s'applique particulièrement mais pas seulement aux réacteurs nucléaires intégrés et aux petits réacteurs modulaires également appelé SMR (pour Small & Modular Reactor en langue anglaise).

### ETAT DE LA TECHNIQUE ANTERIEURE

Dans les réacteurs intégrés, et notamment dans les SMR, les échangeurs de chaleur de puissance, également appelés générateurs de vapeurs, ainsi que les échangeurs de chaleur de sécurité sont positionnés dans la cuve du réacteur. Dans ce type de réacteur, l'augmentation du nombre d'échangeur de chaleur primaire à l'intérieur la cuve du réacteur soulève des problématiques en termes de positionnement ou de dimensionnement de la cuve.

Une première solution consiste à prévoir l'intégration des échangeurs de chaleur primaire de sécurité en parallèle des échangeurs de chaleur de puissance. Dans cette configuration, l'espace disponible pour les échangeurs de chaleur primaire de puissance, permettant de refroidir le réacteur nucléaire en fonctionnement, est alors amputé. Une solution permettant de maintenir l'efficacité du refroidissement du réacteur nucléaire consiste à augmenter le volume de la cuve du réacteur pour intégrer l'ensemble des différents échangeurs de chaleur (de puissance et de sécurité), occasionnant par conséquent un surdimensionnement du réacteur.

Une autre solution existante consiste à positionner les échangeurs de chaleur de sécurité en dessous ou au-dessus de « l'étage » consacré au positionnement optimal des échangeurs de chaleurs dans la cuve du réacteur. Toutefois, dans cette configuration, le positionnement des échangeurs de chaleur primaire de sécurité par rapport au cœur ne permet pas d'optimiser la circulation naturelle du liquide primaire et pose ainsi des problématiques d'efficacité de ces échangeurs de chaleur de sécurité positionnés hors de « l'étage » optimum de refroidissement. Dans une telle configuration, il est donc nécessaire de surdimensionner les échangeurs de sécurité ou d'en augmenter le nombre à l'intérieur de la cuve pour garantir le refroidissement souhaité du réacteur en cas d'incident
L'art antérieur pertinent est divulgué dans les documents suivants : US 2013/336440 A1, US 2013/336441 A1, US 2015/146838 A1.

Toutefois, aucune des solutions présentées précédemment n'est entièrement satisfaisante.

### EXPOSE DE L'INVENTION

Dans ce contexte, l'invention vise à proposer un réacteur nucléaire comportant un échangeur de chaleur primaire de sécurité permettant de s'intégrer facilement dans l'architecture d'une cuve d'un réacteur nucléaire intégré sans augmentation de volume de la cuve, et en proposant une architecture optimisant le positionnement des échangeurs de chaleur primaire de sécurité de manière à assurer leur efficacité.

A cette fin, l'invention a pour objet un réacteur nucléaire comportant une cuve intégrant au moins un échangeur de chaleur primaire de puissance pour le refroidissement du liquide primaire du réacteur nucléaire en fonctionnement normal du réacteur et au moins un échangeur de chaleur primaire de sécurité passif pour le refroidissement du liquide primaire du réacteur nucléaire en cas de dysfonctionnement du refroidissement normal du liquide primaire du réacteur, ledit réacteur nucléaire étant caractérisé en ce que la cuve comporte un logement ménagé dans son épaisseur et en ce que ledit échangeur de chaleur primaire de sécurité passif est intégré au moins partiellement dans ledit logement.

L'invention utilise avantageusement l'architecture « classique » d'une cuve d'un réacteur nucléaire en créant un logement dans l'épaisseur de la cuve et plus particulièrement dans les surépaisseurs de paroi de cuve non utiles d'un point de vue dimensionnel et qui sont imposées par l'architecture globale du réacteur et par les contraintes de fabrication, comme par exemple les épaisseurs de paroi de cuve au niveau des traversées des internes supérieurs. En d'autres termes, le logement est ménagé dans une surépaisseur de la cuve existante et qui est non utile d'un point de vue de la sûreté nucléaire. L'invention se différencie donc d'une architecture de cuve qui présenterait des surépaisseurs initialement prévues lors de la phase de conception en vue d'une intégration d'un tel système de refroidissement passif de sécurité coté primaire, et qui engendrerait une augmentation du volume de la cuve et une augmentation significative des coûts de fabrication.

Le réacteur nucléaire selon l'invention peut également présenter une ou plusieurs des caractéristiques ci-dessous prises individuellement ou selon toutes les combinaisons techniquement possibles :
- ledit logement est ménagé dans l'épaisseur de la cuve au niveau d'une surépaisseur dépourvue d'intérêt dimensionnel ou ne répondant pas aux exigences de sûreté nucléaire ;
- ledit logement ménagé dans l'épaisseur de la cuve est positionné à une altitude correspondant au positionnement dudit au moins un échangeur de chaleur primaire de puissance ;
- ledit échangeur de chaleur primaire de sécurité passif comporte une pluralité de séparateurs formant des canaux d'échanges d'un réseau pour la circulation du fluide de refroidissement secondaire entre deux séparateurs adjacents ;
   - les séparateurs de ladite pluralité présentent une forme adaptée à la maitrise de l'écoulement dans les canaux d'échanges formées par les séparateurs ;
   - les séparateurs de ladite pluralité présentent une forme adaptée au maintien de l'espacement des plaques entre elles ou par rapport au fond du logement malgré l'effet de fond ;
   - les séparateurs de ladite pluralité présentent une forme adaptée pour résister aux contraintes liées au processus d'assemblage, tel que le soudage par diffusion ;
- ledit échangeur de chaleur primaire de sécurité passif est une plaque froide présentant une première face au contact du liquide primaire et une seconde face au contact d'un fluide de refroidissement secondaire, et ladite pluralité de séparateurs est positionnée entre la seconde face de la plaque froide et le fond dudit logement ;

- ledit échangeur de chaleur primaire de sécurité passif comporte une cassette présentant une première plaque et une deuxième plaque, lesdites plaques renfermant ladite pluralité de séparateurs formant un réseau interne pour la circulation du fluide de refroidissement secondaire ;
- la cuve comporte des traversées débouchant au niveau dudit logement et ledit échangeur de chaleur primaire de sécurité passif comporte un tube d'alimentation positionné en partie basse dudit échangeur de chaleur primaire de sécurité passif et un tube d'extraction positionné en parte haute dudit échangeur de chaleur primaire de sécurité passif, le tube d'alimentation et le tube d'extraction permettant la circulation du fluide de refroidissement secondaire à l'intérieur dudit échangeur de chaleur primaire de sécurité passif, le tube d'alimentation et le tube d'extraction traversant la cuve au niveau desdites traversées ;
- le tube d'alimentation et le tube d'extraction communiquent avec ledit réseau interne pour la circulation du fluide de refroidissement secondaire ;
- ledit échangeur de chaleur primaire de sécurité passif est formé par une pluralité de cassettes ;
- ledit logement présente des écopes et ledit échangeur de chaleur primaire de sécurité passif comporte des plots pour maintenir ledit échangeur de chaleur primaire de sécurité passif à une certaine distance du fond du logement, lesdites écopes et lesdits plots autorisant une circulation de liquide primaire dans ledit logement ;
- ledit réacteur nucléaire est un petit réacteur modulaire.

### BREVE DESCRIPTION DES FIGURES

D'autres caractéristiques et avantages de l'invention ressortiront à la lecture de la description qui suit, en référence aux figures annexées.
La figure 1 illustre une vue en section d'une partie d'une cuve d'un réacteur nucléaire intégré illustrant la région située au niveau d'un échangeur de chaleur de puissance.
La figure 2 illustre en perspective un premier mode de réalisation d'un échangeur de chaleur de sécurité selon l'invention ainsi qu'une représentation schématique de la région de la cuve illustrée à la figure 1 prévue pour recevoir l'échangeur de sécurité selon l'invention.
La figure 3 illustre en perspective un deuxième mode de réalisation d'un échangeur de chaleur de sécurité selon l'invention ainsi qu'une représentation schématique de la région de la cuve illustrée à la figure 1 prévue pour recevoir l'échangeur de sécurité selon l'invention.
La figure 4 illustre en perspective une alternative de réalisation du deuxième mode de réalisation d'un échangeur de chaleur de sécurité selon l'invention illustré à la figure 3.
La figure 5 illustre en perspective un troisième mode de réalisation d'un échangeur de chaleur de sécurité selon l'invention ainsi qu'une représentation schématique de la région de la cuve illustrée à la figure 1 prévue pour recevoir l'échangeur de sécurité selon l'invention.
La figure 6 illustre selon une vue en coupe longitudinale un quatrième mode de réalisation d'un échangeur de chaleur de sécurité selon l'invention.
La figure 7 illustre, selon une coupe longitudinale de la cuve, un exemple d'intégration de l'échangeur de chaleur primaire de sécurité illustré à la figure 2.
La figure 8 illustre, selon une coupe longitudinale de la cuve, un exemple d'intégration de l'échangeur de chaleur primaire de sécurité illustré à la figure 5.

### DESCRIPTION DETAILLEE D'UN MODE DE REALISATION

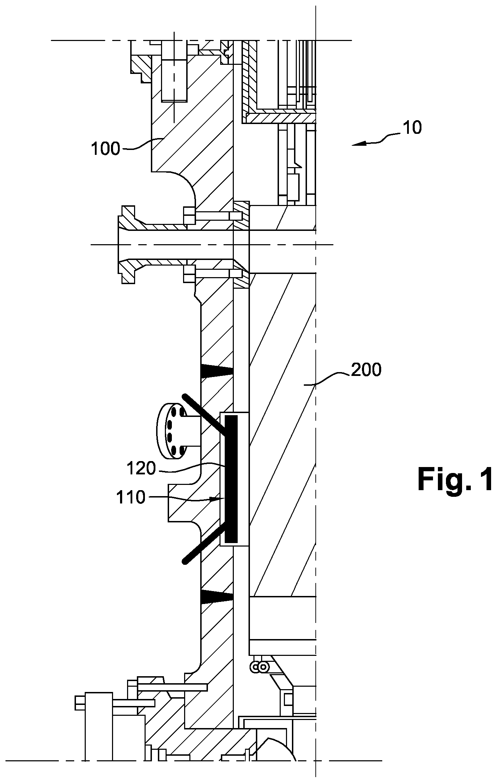

La figure 1 est une vue en section d'une partie d'une cuve 100 d'un réacteur nucléaire 10 de type intégré illustrant plus précisément la périphérie de la cuve 100 notamment au niveau d'un échangeur de chaleur de puissance 200 positionné à l'intérieur de la cuve 100.

La cuve 100 du réacteur intégré présente un logement 110 ménagé dans l'épaisseur de la paroi de la cuve 100 et positionné à une hauteur, par rapport au cœur du réacteur, sensiblement équivalente au positionnement d'un échangeur de chaleur de puissance 200. Le logement 110 s'étend partiellement sur le pourtour de la cuve 100 présentant ainsi une forme curviligne et présente une profondeur de l'ordre d'une dizaine de millimètres.

Le logement 110, ménagé dans la cuve 100, permet de positionner et d'intégrer au moins partiellement un échangeur de chaleur primaire de sécurité 120 dans l'épaisseur de la cuve 100 sans empiéter sur le volume interne dédié au positionnement de l'échangeur de chaleur de puissance 200 dans le réacteur et sans perturber ou obstruer la circulation de fluide primaire entre la paroi de la cuve et l'échangeur de chaleur de puissance 200.

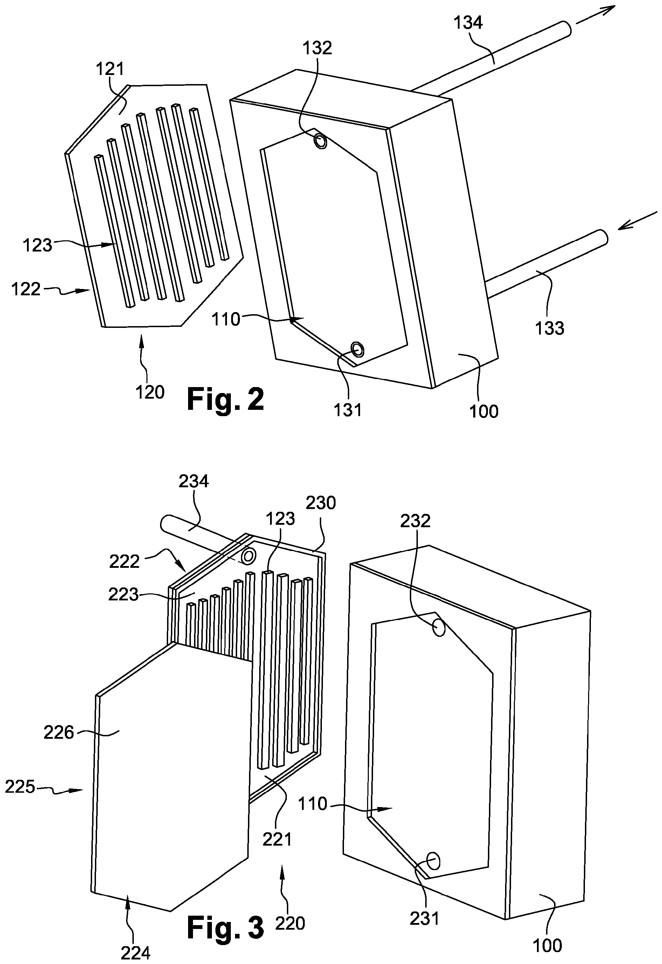

Un premier exemple de réalisation d'un échangeur de chaleur primaire de sécurité 120 est illustré schématiquement à la figure 2. Dans ce mode de réalisation, on a également représenté en perspective la région de la paroi de la cuve 100 du réacteur présentant le logement 110 apte à recevoir et à intégrer l'échangeur de chaleur primaire de sécurité 120 selon l'invention. Selon ce premier exemple de réalisation, l'échangeur de chaleur primaire de sécurité 120 est formé par une simple paroi froide 120 soudée à la paroi interne de la cuve 100 autour du logement 110. La paroi froide 120 comporte une première face 121 positionnée coté logement 110 et une deuxième face 122 en regard avec l'intérieur de la cuve 100. La première face 121 comporte des séparateurs 123 jouant le rôle notamment d'entretoise permettant ainsi de positionner, de garantir le positionnement de la paroi froide 120 dans le logement 110 et à une certaine distance prédéterminée du fond du logement 110. Les séparateurs 123 sont également utiles pour garantir une bonne tenue mécanique de la paroi froide 120 froide sous l'effet de la pression primaire.

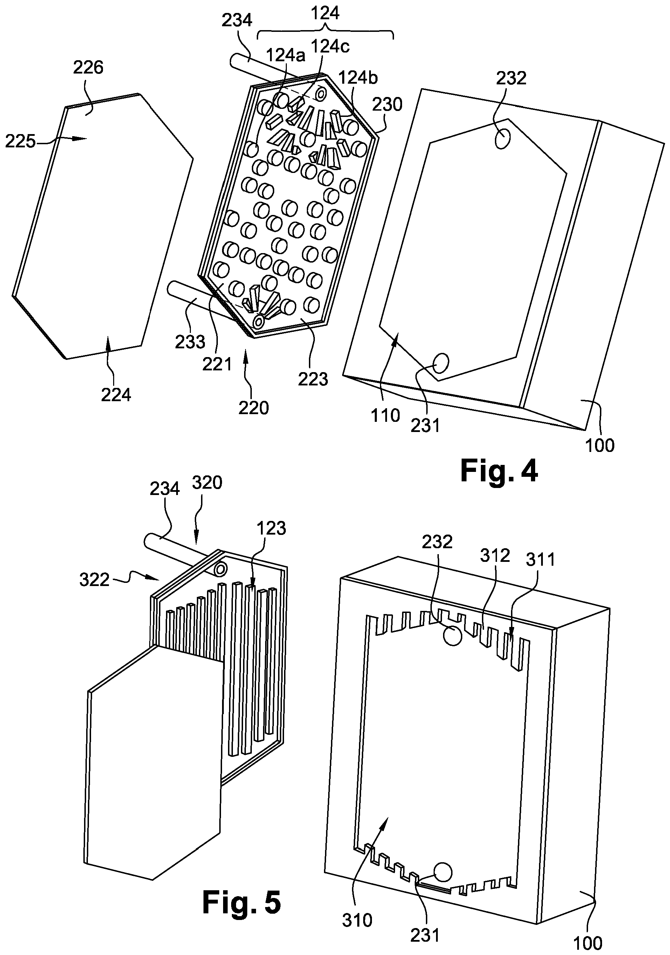

Les séparateurs 123 peuvent présenter diverses formes comme par exemple la forme d'isthme longitudinal orienté dans le sens de la hauteur de la cuve comme représenté à la figure 2. Selon d'autres modes de réalisation, les séparateurs 124 peuvent être représentés sous diverses formes comme par exemple des plots cylindriques 124a, des plots de forme rectiligne 124b ou encore des plots de forme triangulaire 124c comme illustré simultanément à la figure 4.

Les séparateurs 123, 124 définissent ainsi dans le logement 110 des canaux d'échanges d'un réseau de circulation pour la circulation d'un fluide de refroidissement, dit secondaire ou de sécurité apte à réaliser un échange de chaleur avec le fluide primaire à l'intérieur de la cuve 100. La forme des séparateurs 123, 124 est déterminée en fonction de l'écoulement désiré du fluide de refroidissement secondaire dans le réseau de circulation, mais aussi pour assurer le maintien de l'espacement des plaques entre elles ou de la plaque par rapport au fond du logement 110, malgré l'effet de fond et pour supporter les contraintes liées au procédé d'assemblage (ex : soudage par diffusion).

Les séparateurs 123 en forme d'isthme, telle que représentée en figure 2, permettent avantageusement de créer des canaux longitudinaux dans le sens de la hauteur de la cuve favorisant la circulation verticale (i.e. dans le sens de la hauteur de la cuve) du fluide de refroidissement secondaire.

Dans ce premier mode de réalisation illustré à la figure 2, les séparateurs 123 sont positionnés sur la plaque froide 120 et plus précisément sur la face de la plaque froide 120 en regard du logement 110 de la cuve. Selon une alternative de réalisation, il est également prévu de positionner les séparateurs dans le fond du logement 110.

Le réseau ainsi crée est desservi par une admission 131 positionnée en partie basse du logement 110 et une évacuation 132 positionnée en partie haute du logement 110, l'admission 131 et l'évacuation 132 étant respectivement reliées à des traversées traversant la paroi de la cuve 100, appelée traversée d'alimentation 133 pour l'alimentation en partie basse et traversée d'évacuation 134 pour l'évacuation en partie haute. Dans ce mode de réalisation, les traversées d'alimentation 133 et d'évacuation 134 sont rendues solidaires et étanches avec la paroi de la cuve par des moyens classiquement prévus à cet effet. Toutefois, selon une variante de réalisation, les traversées d'alimentation 133 et d'évacuation 134 peuvent être remplacées par de simples orifices traversant la cuve 100.

Les séparateurs 123 permettent avantageusement de créer un écoulement particulier et de forcer le débit de fluide secondaire à parcourir l'ensemble du réseau de la paroi froide 120 avant de ressortir du logement 110 par la traversée d'évacuation 134 de manière à maximiser la surface d'échange de chaleur.

De manière simplifiée, la paroi froide 120 et la paroi de cuve 100 sont représentées de manière plane. Toutefois, dans la pratique, la paroi de cuve 100 étant cylindrique, la paroi froide 120 présente une forme cylindrique dont la courbure est sensiblement identique à la courbure du fond du logement 110.

Avantageusement, la réalisation d'un échangeur de chaleur de sécurité formé par une simple paroi froide 120 permet d'utiliser la souplesse de la paroi froide 120 de faible épaisseur pour suivre la courbure de la cuve 100, et plus précisément le fond du logement 110, et d'encaisser les dilatations différentielles inhérentes au système.

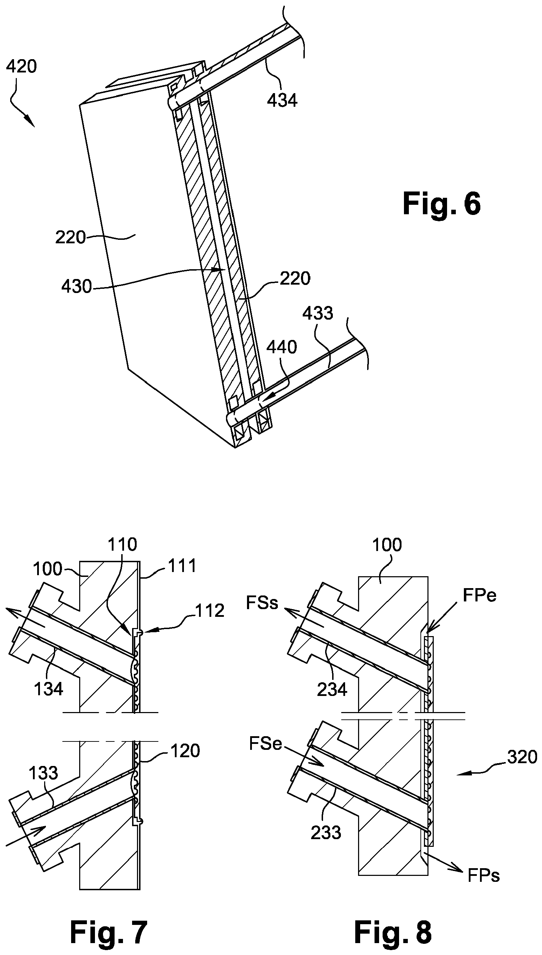

La figure 7 illustre, selon une coupe longitudinale de la cuve 100, un exemple d'intégration de l'échangeur de chaleur primaire de sécurité 120 dans le logement 110 de la paroi de cuve 100. Une étanchéité entre la paroi froide 120 et le revêtement 111 de la paroi interne de la cuve 100 est assurée par exemple par la réalisation d'une soudure de lèvre 112 de type canopy (circulaire ou aplatie). Ce type de soudure permet avantageusement de limiter les déformations et les contraintes lors de l'opération de soudage. La figure 7 illustre également le sens de circulation du fluide de refroidissement secondaire entre la traversée d'alimentation 133 pour l'alimentation en partie basse et traversée d'évacuation 134 pour l'évacuation en partie haute.

Ainsi grâce à l'invention, la réfrigération du liquide primaire se fait principalement par la paroi 122 de la paroi froide 120 de l'échangeur et, de manière complémentaire, par conduction via la paroi de cuve, notamment dans la région proche du logement 110 qui reçoit le fluide de refroidissement secondaire.

Dans ce premier mode de réalisation, le logement 110 présente une épaisseur d'environ 10 à 20 mm, ce qui est suffisant pour loger complètement la plaque froide 120 comme illustré à la figure 7.

La figure 3 illustre un deuxième mode de réalisation d'un échangeur de chaleur primaire de sécurité 220. Ce deuxième mode de réalisation propose un échangeur de chaleur primaire de sécurité 220 démontable et présentant une structure autoportante. Pour cela, l'échangeur de chaleur 220 est réalisé sous la forme d'une « cassette » démontable. Cette cassette est constituée de deux plaques 221 et 224 positionnées l'une sur l'autre de manière à réaliser un assemblage compact et étanche. La première plaque 221 forme le fond de la cassette 220 et comporte une face externe 222 destinée à être en contact avec la paroi de fond du logement 110 et une face interne 223 comportant, de manière identique au premier mode de réalisation, une pluralité de séparateurs 123 formant un réseau de canaux internes d'échange de chaleur pour la circulation du fluide secondaire à l'intérieur de la cassette 220 étanche. La deuxième plaque 224 forme la paroi externe de la cassette 220 et présente une face interne 225 positionnée en regard de la face interne 223 de la plaque de fond 221 et une face externe 226 directement en contact avec le liquide primaire et destinée à être soudée sur le revêtement intérieur de la cuve 100 lorsque la cassette 220 est en position dans le logement 110.

De manière identique au premier mode de réalisation décrit à la figure 2, les séparateurs 123 peuvent présenter diverses formes comme par exemple la forme d'isthme longitudinal orienté dans le sens de la hauteur de la cuve comme représenté à la figure 3, ou encore sous la forme de plots pouvant présenter des formes diverses comme illustré à la figure 4 qui représente une alternative de réalisation de l'échangeur de chaleur 220 réalisé sous la forme d'une « cassette » démontable illustré à la figure 3. Les séparateurs 124 peuvent être par exemple de forme cylindrique 124a ou de forme rectiligne 124b ou de forme triangulaire 124c ou encore d'une combinaison de plusieurs formes. Dans ce mode de réalisation, les séparateurs 123 peuvent également assurer le maintien de l'espacement des plaques entre elles.

Dans le deuxième mode de réalisation illustré à la figure 3 et dans l'alternative de réalisation de ce deuxième mode illustré à la figure 4, les séparateurs 123, 124 sont positionnés à titre d'exemple sur une face interne 223 de la première plaque 221. Selon une alternative de réalisation, les séparateurs 123, 124 peuvent également être positionnés sur la face interne 225 de la deuxième plaque 224.

Les deux plaques 221 et 224 sont soudées entre elles au niveau de leurs chants périphériques de manière à renfermer à l'intérieur de la cassette 220 le réseau de canaux internes d'échange de chaleur formant ainsi un circuit de circulation fermé de fluide secondaire. Une des deux plaques, par exemple la plaque de fond 221 comme représentée à la figure 3 et à la figure 4, comporte une bordure périphérique 230, sensiblement de même épaisseur que les séparateurs 123, 124, sur laquelle la plaque externe 224 est en appui.

Le réseau de canaux internes formé par la pluralité de séparateurs 123, 124 est connecté à un tube d'alimentation 233 (non visible sur la figure 3) en partie basse de la cassette 220 et à un tube d'extraction 234 en partie haute de la cassette 220. La cassette 220, équipée de ces tubes d'alimentation et d'extraction 234, est placée dans le logement 110 ménagé dans la paroi de la cuve 100. Les tubes d'alimentation et d'extraction sont alors positionnés dans des traversées 231, 232 de la cuve 100.

La cassette 220 est avantageusement soudée au niveau de sa plaque externe 224 au revêtement interne de la paroi de cuve 100, ce qui permet de s'affranchir d'une opération supplémentaire de soudage des tubes d'alimentation 233 et d'évacuation 234 dans les traversées 231, 232 simplifiant les opérations de maintenance. Ainsi, le fluide de refroidissement primaire est arrêté au niveau de la liaison entre la cassette et le revêtement interne de la paroi de cuve 100. Le fluide de refroidissement secondaire est quant à lui piégé dans la cassette. C'est pourquoi il n'est pas obligatoire de recourir à une opération de soudage par l'extérieur des tubes d'alimentation 233 et d'évacuation 234 sur la paroi extérieure de la cuve 100 au niveau des pénétrations pour assurer l'étanchéité de l'ensemble. Bien entendu, la réalisation d'une soudure supplémentaire par l'extérieur des tubes d'alimentation et d'évacuation permet d'obtenir une ligne d'étanchéité supplémentaire par rapport au fluide primaire (par exemple en cas de perte d'étanchéité entre la cassette 220 et la cuve 100), ou encore par rapport au fluide de refroidissement secondaire (par exemple en cas de fuite de la cassette dans sa partie positionnée en cuve).

La figure 5 illustre un troisième mode de réalisation d'un échangeur de chaleur primaire de sécurité 320 selon l'invention. Ce troisième mode de réalisation est sensiblement identique au deuxième mode de réalisation décrit précédemment à l'exception des éléments qui vont être décrits dans les paragraphes suivants.

Dans ce troisième mode de réalisation, l'échangeur de chaleur primaire de sécurité 320 n'est pas soudée sur le revêtement intérieur de la cuve 100, de manière à faciliter davantage son démontage d'une part et de manière à maximiser le refroidissement du liquide primaire d'autre part.

Pour cela, l'échangeur de chaleur primaire de sécurité 320, également sous la forme d'une cassette comme illustré précédemment, comporte sur sa plaque de fond des plots positionnés en regard du fond du logement 310, les plots permettant le maintien de la cassette 320 à une certaine distance du fond du logement 310. Le logement 310 présente également des écopes 311 autorisant, en combinaison avec les plots de la cassette 320, l'introduction et la circulation du liquide primaire dans le logement 310, c'est-à-dire derrière la cassette 320 lorsque celle-ci est en position dans le logement 310. Les écopes 311 sont avantageusement placées dans le sens longitudinal de la cuve 100 du réacteur de manière à permettre une circulation naturelle du liquide primaire du haut vers le bas du réacteur.

La figure 8 illustre, selon une coupe longitudinale de la cuve 100, un exemple d'intégration de l'échangeur de chaleur primaire de sécurité 320 dans le logement 310 de la paroi de cuve 100. L'échangeur de chaleur primaire de sécurité 320 est monté en saillie dans le logement 310 de la paroi de cuve, à une certaine distance du fond du logement 310. Les écopes 311 permettent le passage du fluide primaire dans le logement 310 selon le sens de circulation représenté à la figure 8 par les flèches FPe et FPs. Ainsi, le fluide primaire échange avec les deux parois de l'échangeur 320.

La figure 6 illustre un quatrième mode de réalisation d'un échangeur de chaleur primaire de sécurité 420 selon l'invention selon une coupe longitudinale. Ce quatrième mode de réalisation est sensiblement identique au deuxième mode de réalisation décrit précédemment à l'exception des éléments qui vont être décrits dans les paragraphes suivants.

En effet, ce quatrième mode de réalisation comporte une pluralité de cassettes 220 ,telles que décrites en référence à la figure 2, montées en parallèle et espacées les unes des autres pour un espace interne 430 ménagé pour permettre l'introduction et la circulation du fluide primaire entre les différentes cassettes 220.

La figure 6 illustre uniquement deux cassettes 220 montées en parallèle et espacées par un espace interne 430. Toutefois, l'échangeur de chaleur primaire de sécurité 420 selon l'invention peut comporter une pluralité de cassettes 220 montées en parallèle, chaque cassette de ladite pluralité étant espacée d'une deuxième cassette adjacente par un espace interne 430 dans lequel circule du liquide primaire. Le nombre de cassette 220 de l'échangeur de sécurité sera choisi en fonction du ratio entre encombrement/performance souhaité.

Dans ce mode de réalisation, les tubes d'alimentation 433 et d'extraction 434 comportent des ouvertures 440 agencées au niveau de chacune des cassettes de l'échangeur, et plus précisément au niveau de l'espace interne de chacune des cassettes de manière à permettre la circulation du fluide secondaire à l'intérieur de la pluralité de cassettes 220..

Selon une alternative de réalisation de ce quatrième mode de réalisation, l'échangeur de chaleur primaire de sécurité 420 peut également comporter des plots, tels que décrits précédemment dans le troisième mode de réalisation illustré à la figure 4.

De manière générale, dans tous les modes de réalisation décrits, les soudures sont réalisées typiquement au moyen d'un procédé de soudage par diffusion et les matériaux utilisés pour la réalisation des échangeurs de sécurité décrits sont classiquement des matériaux du type acier inoxydable ou des matériaux à base nickel.

De manière générale, les échangeurs de chaleur de sécurité selon l'invention ainsi que les parois de cuve 100 ont été représentées schématiquement de manière plane. Toutefois, dans la pratique, compte tenu que la paroi de cuve 100 est cylindrique, les échangeurs de sécurité décrits précédemment présentent bien évidemment une forme courbée, ou cylindrique, sensiblement identique à la courbure du fond du logement 110 ménagé dans la paroi de la cuve 100.

Grâce au faible encombrement de l'échangeur de chaleur de sécurité selon l'invention, il est possible de l'intégrer directement dans l'épaisseur de la paroi de cuve du réacteur nucléaire à un niveau, ou étage, de la cuve permettant d'optimiser le rendement de tels systèmes de refroidissement passifs. Le positionnement dans un logement de la cuve permet ainsi d'optimiser le refroidissement du liquide primaire en cas d'incident sans influer ou dégrader les capacités de refroidissement des échangeurs de chaleur de puissance du réacteur en cours de fonctionnement tout en répondant aux exigences de sûreté au niveau de la paroi de la cuve du réacteur nucléaire compte tenu de la faible épaisseur du logement nécessaire pour l'intégration d'un échangeur de chaleur de sécurité selon l'invention.

## Revendications

1. Réacteur nucléaire (10) comportant une cuve (100) intégrant au moins un échangeur de chaleur primaire de puissance (200) pour le refroidissement du liquide primaire du réacteur nucléaire en fonctionnement normal du réacteur et au moins un échangeur de chaleur primaire de sécurité passif (120, 220, 320, 420) pour le refroidissement du liquide primaire du réacteur nucléaire en cas de dysfonctionnement du refroidissement normal du liquide primaire du réacteur, ledit réacteur nucléaire (10) étant **caractérisé en ce que** la cuve (100) comporte un logement (110, 310) ménagé dans son épaisseur et **en ce que** ledit échangeur de chaleur primaire de sécurité passif (120, 220, 320, 420) est intégré au moins partiellement dans ledit logement (110, 310).

2. Réacteur nucléaire (10) selon la revendication 1, **caractérisé en ce que** ledit logement (110, 310) est ménagé dans l'épaisseur de la cuve (100) au niveau d'une surépaisseur dépourvue d'intérêt dimensionnel ou ne répondant pas aux exigences de sûreté nucléaire.

3. Réacteur nucléaire (10) selon l'une des revendications 1 à 2, **caractérisé en ce que** ledit logement (110, 310) ménagé dans l'épaisseur de la cuve (100) est positionné à une altitude correspondant au positionnement dudit au moins un échangeur de chaleur primaire de puissance (200).

4. Réacteur nucléaire (10) selon l'une des revendications 1 à 3, **caractérisé en ce que** ledit échangeur de chaleur primaire de sécurité passif (120, 220, 320, 420) comporte une pluralité de séparateurs (123) formant des canaux d'échanges d'un réseau pour la circulation du fluide de refroidissement secondaire entre deux séparateurs (123) adjacents.

5. Réacteur nucléaire (10) selon la revendication 4, **caractérisé en ce que** ledit échangeur de chaleur primaire de sécurité passif (120) est une plaque froide (120) présentant une première face (122) au contact du liquide primaire et une seconde face (121) au contact d'un fluide de refroidissement secondaire, et **en ce que** ladite pluralité de séparateurs (123) est positionnée entre la seconde face (121) de la plaque froide (120) et le fond dudit logement (110).

6. Réacteur nucléaire (10) selon la revendication 4, **caractérisé en ce que** ledit échangeur de chaleur primaire de sécurité passif comporte une cassette (220) présentant une première plaque (221) et une deuxième plaque (224), lesdites plaques (221, 224) renfermant ladite pluralité de séparateurs (123) formant un réseau interne pour la circulation du fluide de refroidissement secondaire.

7. Réacteur nucléaire (10) selon la revendication 6, **caractérisé en ce que** la cuve (100) comporte des traversées (231, 232) débouchant au niveau dudit logement (110, 310) et **en ce que** ledit échangeur de chaleur primaire de sécurité passif comporte un tube d'alimentation (433) positionné en partie basse dudit échangeur de chaleur primaire de sécurité passif et un tube d'extraction (234, 434) positionné en partie haute dudit échangeur de chaleur primaire de sécurité passif, le tube d'alimentation et le tube d'extraction permettant la circulation du fluide de refroidissement secondaire à l'intérieur dudit échangeur de chaleur primaire de sécurité passif, le tube d'alimentation et le tube d'extraction traversant la cuve (100) au niveau desdites traversées (231, 232).

8. Réacteur nucléaire (10) selon la revendication 7, **caractérisé en ce que** le tube d'alimentation et le tube d'extraction communiquent avec ledit réseau interne pour la circulation du fluide de refroidissement secondaire.

9. Réacteur nucléaire (10) selon l'une des revendications 6 à 8, **caractérisé en ce que** ledit échangeur de chaleur primaire de sécurité passif (420) est formé par une pluralité de cassettes (220).

10. Réacteur nucléaire (10) selon l'une des revendications 6 à 8 **caractérisé en ce que** ledit logement présente des écopes (311) et **en ce que** ledit échangeur de chaleur primaire de sécurité passif (320) comporte des plots pour maintenir ledit échangeur de chaleur primaire de sécurité passif (320) à une certaine distance du fond du logement (310), lesdites écopes (311) et lesdits plots autorisant une circulation de liquide primaire dans ledit logement (310).

## Patentansprüche

1. Kernreaktor (10), aufweisend einen Behälter (100) mit mindestens einem Primärleistungswärmetauscher (200) für die Kühlung der Primärflüssigkeit des Kernreaktors bei normalem Betrieb des Reaktors und mindestens einen passiven Primärsicherheitswärmetauscher (120, 220, 320, 420) für die Kühlung der Primärflüssigkeit des Kernreaktors bei Fehlfunktion der normalen Kühlung der Primärflüssigkeit des Reaktors, wobei der Kernreaktor (10) **dadurch gekennzeichnet ist, dass** der Behälter (100) eine in seine Dicke eingerichtete Aufnahme (110, 310) aufweist und dass der passive Primärsicherheitswärmetauscher (120, 220, 320, 420) mindestens zum Teil in die Aufnahme (110, 310) integriert ist.

2. Kernreaktor (10) nach Anspruch 1, **dadurch gekennzeichnet, dass** die Aufnahme (110, 310) in der Dicke des Behälters (100) im Bereich einer Überdicke ohne Dimensionsinteresse oder die nicht den kerntechnischen Sicherheitsanforderungen entspricht, eingerichtet ist.

3. Kernreaktor (10) nach einem der Ansprüche 1 bis 2, **dadurch gekennzeichnet, dass** die in der Dicke des Behälters (100) eingerichtete Aufnahme (110, 310) in einer Höhe positioniert ist, die der Positionierung des mindestens einen Primärleistungswärmetauschers (200) entspricht.

4. Kernreaktor (10) nach einem der Ansprüche 1 bis 3, **dadurch gekennzeichnet, dass** der passive Primärsicherheitswärmetauscher (120, 220, 320, 420) eine Vielzahl von Separatoren (123) aufweist, die Tauscherkanäle eines Netzwerks für die Zirkulation des sekundären Kühlfluids zwischen zwei benachbarten Separatoren (123) bilden.

5. Kernreaktor (10) nach Anspruch 4, **dadurch gekennzeichnet, dass** der passive Primärsicherheitswärmetauscher (120) eine kalte Platte (120) ist, die eine erste Fläche (122) im Kontakt mit der Primärflüssigkeit und eine zweite Fläche (121) im Kontakt mit einem sekundären Kühlfluid aufweist und dass die Vielzahl von Separatoren (23) zwischen der ersten Fläche (121) der kalten Platte (120) und dem Boden der Aufnahme (110) positioniert ist.

6. Kernreaktor (10) nach Anspruch 4, **dadurch gekennzeichnet, dass** der passive Primärsicherheitswärmetauscher eine Kassette (220) aufweist, die eine erste Platte (221) und eine zweite Platte (224) aufweist, wobei die Platten (221, 224) die Vielzahl von Separatoren (123) einschließen, die ein internes Netzwerk für die Zirkulation des sekundären Kühlfluids bilden.

7. Kernreaktor (10) nach Anspruch 6, **dadurch gekennzeichnet, dass** der Behälter (100) Durchleitungen (231, 232) aufweist, die im Bereich der Aufnahme (110, 310) ausmünden und dass der passive Primärsicherheitswärmetauscher ein Versorgungsrohr (433) aufweist, das im unteren Teil des passiven Primärsicherheitswärmetauschers positioniert ist, und ein Ableitungsrohr (234, 434), das im oberen Teil des passiven Primärsicherheitswärmetauschers positioniert ist, wobei das Versorgungsrohr und das Ableitungsrohr die Zirkulation des sekundären Kühlfluids im Inneren des passiven Primärsicherheitswärmetauschers erlauben, wobei das Versorgungsrohr und das Ableitungsrohr den Behälter (100) im Bereich der Durchleitungen (231, 232) durchqueren.

8. Kernreaktor (10) nach Anspruch 7, **dadurch gekennzeichnet, dass** das Versorgungsrohr und das Ableitungsrohr mit dem internen Netzwerk für die Zirkulation des sekundären Kühlfluids kommunizieren.

9. Kernreaktor (10) nach einem der Ansprüche 6 bis 8, **dadurch gekennzeichnet, dass** der passive Primärsicherheitswärmetauscher (420) von einer Vielzahl von Kassetten (220) gebildet ist.

10. Kernreaktor (10) nach einem der Ansprüche 6 bis 8 **dadurch gekennzeichnet, dass** die Aufnahme Schaufeln (311) aufweist und dass der passive Primärsicherheitswärmetauscher (320) Zapfen aufweist, um den passiven Primärsicherheitswärmetauscher (320) in einem bestimmten Abstand vom Boden der Aufnahme (310) zu halten, wobei die Schaufeln (311) und die Zapfen eine Zirkulation von Primärflüssigkeit in der Aufnahme (310) gestatten.

## Claims

1. A nuclear reactor (10) including a vessel (100) integrating at least one power primary heat exchanger (200) for cooling primary liquid of the nuclear reactor in normal operation of the reactor and at least one passive safety primary heat exchanger (120, 220, 320, 420) for cooling primary liquid of the nuclear reactor in case of a dysfunction in the normal cooling of the primary liquid of the reactor, said nuclear reactor (10) being **characterised in that** the vessel (100) includes a housing (110, 310) provided in its thickness and **in that** said passive safety primary heat exchanger (120, 220, 320, 420) is at least partially integrated into said housing (110, 310).

2. The nuclear reactor (10) according to claim 1, **characterised in that** said housing (110, 310) is provided in the thickness of the vessel (100) at an extra thickness free of dimensional interest or not meeting nuclear safety requirements.

3. The nuclear reactor (10) according to one of claims 1 to 2, **characterised in that** said housing (110, 310) provided in the thickness of the vessel (100) is positioned at an altitude corresponding to the positioning of said at least one power primary heat exchanger (200).

4. The nuclear reactor (10) according to one of claims 1 to 3, **characterised in that** said passive safety primary heat exchanger (120, 220, 320, 420) includes a plurality of separators (123) forming exchange channels of a network for circulating the secondary coolant between two adjacent separators (123).

5. The nuclear reactor (10) according to claim 4, **characterised in that** said passive safety primary heat exchanger (120) is a cold plate (120) having a first face (122) in contact with the primary liquid and a second face (121) in contact with a secondary coolant, and **in that** said plurality of separators (123) is positioned between the second face (121) of the cold plate (120) and the bottom of said housing (110).

6. The nuclear reactor (10) according to claim 4, **characterised in that** said passive security primary heat exchanger includes a cassette (220) having a first plate (221) and second plate (224), said plates (221, 224) enclosing said plurality of separators (123) forming an inner network for circulating the secondary coolant.

7. The nuclear reactor (10) according to claim 6, **characterised in that** the vessel (100) includes through holes (231, 232) opening into said housing (110, 310) and **in that** said passive safety primary heat exchanger includes a supply tube (433) positioned at a bottom part of said passive safety primary heat exchanger and an extracting tube (234, 434) positioned at a top part of said passive safety primary heat exchanger, the supply tube and extracting tube enabling the secondary coolant to circulate inside said passive safety primary heat exchanger, the supply tube and extracting tube passing through the vessel (100) at said through holes (231, 232).

8. The nuclear reactor (10) according to claim 7, **characterised in that** the supply tube and extracting tube communicate with said inner network for circulating the secondary coolant.

9. The nuclear reactor (10) according to one of claims 6 to 8, **characterised in that** said passive safety primary heat exchanger (420) is formed by a plurality of cassettes (220).

10. The nuclear reactor (10) according to one of claims 6 to 8, **characterised in that** said housing has scoops (311) and **in that** said passive safety primary heat exchanger (320) includes studs to maintain said passive safety primary heat exchanger (320) at a distance from the bottom of the housing (310), said scoops (311) and said studs allowing primary liquid to circulate in said housing (310).
